# EUROPEAN PATENT APPLICATION

(11) **EP 4 407 422 A1**
(43) Date of publication of application: **31.07.2024**
(21) Application number: 22872602.2
(22) Date of filing: 17.08.2022
(51) Int. Cl.: G06F 3/04812, G06F 40/166

(54) **METHOD, DEVICE, AND PROGRAM FOR EDITING MATHEMATICAL FORMULA**

(30) Priority: 22.09.2021 JP 2021154461
(71) Applicant: Casio Computer Co., Ltd., Tokyo 151-8543 (JP)
(72) Inventor: MAEDA, Naoya, Hamura-shi, Tokyo 205-8555 (JP)
(74) Representative: Grünecker Patent- und Rechtsanwälte PartG mbB
(86) International application number: PCT/JP2022/031089
(87) International publication number: WO 2023/047846

(57) **Abstract**

A mathematical expression editing method according to an embodiment of the present invention includes: specifying a copying subject range from a predetermined mathematical expression based on a selecting action of a user; determining, in response to an operator being specified from the copying subject range, an inputting position for a new character to be input into a mathematical expression which contains the copying subject range, based on the specified operator; and setting the determined inputting position to be a display position of a cursor.

## Description

### FIELD

The present invention relates to a mathematical expression editing method, a mathematical expression editing apparatus, and a mathematical expression editing program.

### BACKGROUND

Software intended for execution by a personal computer or the like has a function called "copy and paste", which selects and copies a character or a character string and pastes the same into a desired position. It is usual that an input cursor after the pasting is moved to the back of the pasted character string.

Recently, with the wide-spreading use of electronic devices furnished with a touch panel, such as a tablet and a smartphone, software for inputting mathematical expressions that can be used through a touch panel has been proposed. For example, in a scientific calculator disclosed in Jpn. Pat. Appln. KOKAI Publication No. 2011-175400, an input cursor after pasting of a mathematical expression is positioned behind the pasted mathematical expression.

### SUMMARY

### TECHNICAL PROBLEM

However, it is often the case with mathematical expressions that a pasted mathematical expression is desired to be edited. As one example, supposing that an integral expression is pasted, an integrand would be in many cases the subject of editing. Here, if an input cursor is put behind the mathematical expression, the input cursor needs to be moved back to the position for the integrand in order to edit the integrand. That is, editing of a mathematical expression with pasting often necessitates an action of moving the position of the input cursor, and this has been a cause of complicated actions and increased burden.

The present invention has been made in view of such a problem, and its objects include providing a mathematical expression editing method, a mathematical expression editing apparatus, and a mathematical expression editing program which can simplify an editing action after copying an operator included in a mathematical expression.

### SOLUTION TO PROBLEM

In order to solve the aforementioned problem, a mathematical expression editing method according to an embodiment of the present invention includes: specifying a copying subject range from a predetermined mathematical expression based on a selecting action of a user; determining, in response to an operator being specified from the copying subject range, an inputting position for a new character to be input into a mathematical expression which contains the copying subject range, based on the specified operator; and setting the determined inputting position to be a display position of a cursor.

### ADVANTAGEOUS EFFECTS OF INVENTION

According to the present invention, in the instances where a part of a mathematical expression is copied, actions for subsequent editing can be simplified.

### BRIEF DESCRIPTION OF THE DRAWINGS

FIG. 1 is a diagram showing an exemplary configuration of a system including an information processing apparatus 3 according to the embodiment.
FIG. 2 is a diagram showing information processing blocks of a control unit according to the embodiment.
FIG. 3 is a diagram showing an exemplary input screen for inputting a mathematical expression in the context of the embodiment.
FIG. 4 is a flowchart showing a copying process for a selected range in a mathematical expression editing method according to the embodiment.
FIG. 5 is a flowchart showing the copying process for a selected range in the mathematical expression editing method according to the embodiment.
FIG. 6 is a flowchart showing a selected state cancellation determining process within the copying process according to the embodiment.
FIG. 7 is a flowchart showing a copy determining process within the copying process according to the embodiment.
FIG. 8 is a flowchart showing a selected range pasting process within the copy determining process according to the embodiment.
FIG. 9 is a diagram for explaining a selected range for a mathematical expression in the context of the embodiment, wherein (A) shows a state in which an operator "+" has been tapped and (B) shows a state in which an operand of the tapped operator "+" has been specified.
FIG. 10 is a diagram for explaining a selected range for a mathematical expression in the context of the embodiment, wherein (A) shows a state in which an operand "3" has been tapped and (B) shows a state in which characters related to the tapped operand have been specified.
FIG. 11 is a diagram for explaining a selected range for a mathematical expression in the context of the embodiment, wherein (A) shows a state in which a selected portion has been subjected to a long-pressing action and (B) shows a state in which the selected range has been enlarged as a result of the long-pressing action.
FIG. 12 is a diagram for explaining a selected range for a mathematical expression in the context of the embodiment, wherein (A) shows a state in which special operators "f" and "dx" have been tapped and (B) shows a state in which further tapping has put a range designation on the special operators "f" and "dx" and the operand.
FIG. 13 is a diagram for explaining a selected range for a mathematical expression in the context of the embodiment, wherein (A) shows a state in which special operators "f" and "dx" have been designated by tapping, (B) shows a state in which further tapping has put a range designation on the special operators "f" and "dx" and also the parameters, and (C) shows a state in which yet further tapping has put a range designation on the special operators "f" and "dx", the parameters, and the operand.
FIG. 14 is a diagram for explaining a selected range for a mathematical expression in the context of the embodiment, wherein (A) shows a state in which tapping has put a range designation on a special operator "Σ", (B) shows a state in which further tapping has put a range designation on the special operator "Σ" and also the parameters, and (C) shows a state in which yet further tapping has put a range designation on the special operator "Σ", the parameters, and the operand.
FIG. 15 is a diagram for explaining a selected range for a mathematical expression in the context of the embodiment, wherein (A) shows a state in which a range of an operand is designated and (B) shows a state in which a range designation has been further put on special operators "f" and "dx" appearing before and after the operand.
FIG. 16 is a diagram for explaining a selected range pasting process in the context of the embodiment, wherein (A) shows a state in which an operator "+" is set as a selected range and (B) shows the position of a cursor with the pasting process of the operator "+" performed.
FIG. 17 is a diagram for explaining a selected range pasting process in the context of the embodiment, wherein (A) shows a state in which a character string containing an operator and an operand is set as a selected range and (B) shows the position of a cursor with the pasting process of the character string performed.
FIG. 18 is a diagram for explaining a selected range pasting process in the context of the embodiment, wherein (A) shows a state in which a selected range is only a special operator and (B) shows the position of a cursor with the special operator in the selected range pasted.
FIG. 19 is a diagram for explaining a selected range pasting process in the context of the embodiment, wherein (A) shows a state in which a selected range is only a special operator and (B) shows the position of a cursor with the special operator in the selected range pasted.
FIG. 20 is a diagram for explaining a selected range pasting process in the context of the embodiment, wherein (A) shows a state in which a selected range is constituted by special operators and parameters, (B) shows the position of a cursor with the selected range pasted, and (C) shows the position of the cursor with the selected range pasted and under the condition that priority has been set for parameter positions.
FIG. 21 is a diagram for explaining a selected range pasting process in the context of the embodiment, wherein (A) shows a state in which a selected range is constituted by special operators, parameters, and an operand, and (B) shows the position of a cursor with the selected range pasted.

### DETAILED DESCRIPTION

Embodiments of the present invention will be described with reference to the drawings.

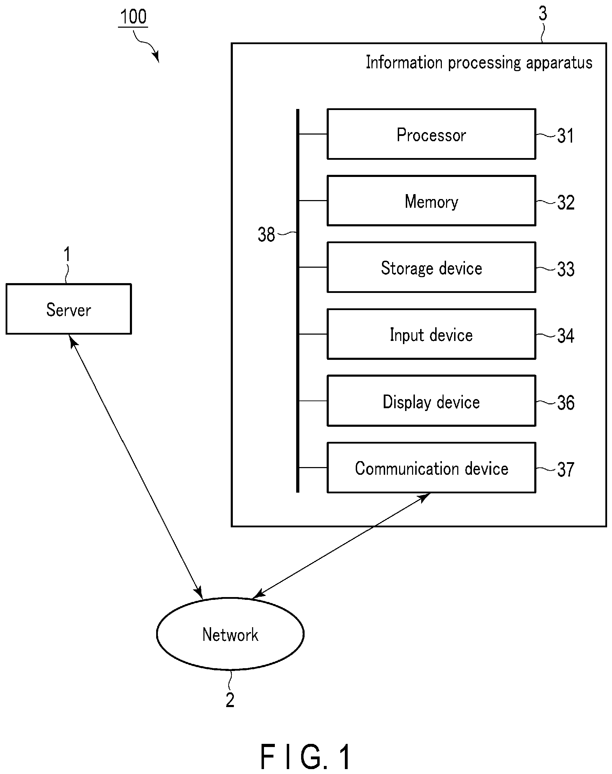

An information processing apparatus 3 according to an embodiment of the present invention determines a range of selection for a mathematical expression displayed on a display screen in accordance with a character tapped by the user and the type of the tapping. FIG. 1 is a diagram showing an exemplary configuration of a system 100 including the information processing apparatus 3. The system 100 includes a server 1 and the information processing apparatus 3, which is communicably connected to the server 1 via a network 2. The server 1 or the information processing apparatus 3 works as a mathematical expression editing apparatus.

The server 1 receives data for calculation, a mathematical expression, and an instruction for calculation from the information processing apparatus 3, calculates the data based on the received mathematical expression and the calculation instruction, and sends the calculation result to the information processing apparatus 3. The network 2 is a communication network for connecting the server 1 and the information processing apparatus 3 so that they can communicate with each other. The network 2 is, in one example, the Internet.

The information processing apparatus 3 is a terminal apparatus and its examples include a smartphone, a tablet personal computer (PC), and so on. As one exemplary configuration, the information processing apparatus 3 includes a processor 31, a memory 32, a storage device 33, an input device 34, a display device 36, and a communication device 37. The processor 31, the memory 32, the storage device 33, the input device 34, the display device 36, and the communication device 37 are connected to one another via a bus 38.

The processor 31 reads various programs stored in the storage device 33, loads the programs in the memory 32, and executes the programs. The processor 31 may be configured with a processing device or devices including a central processing unit (CPU), a micro processing unit (MPU), and so on. The memory 32 may be configured with a storage device or devices and a storage medium or media, including a volatile or nonvolatile semiconductor memory such as a random access memory (RAM) and a flash memory.

The storage device 33 is a device for storing various programs for execution by the processor 31 and various datasets for use with the various programs. The storage device 33 may be configured with a storage device or devices including a hard disk drive (HDD), a solid state drive (SSD), and so on.

The input device 34 is a device for receiving inputs from the user. The input device 34 may be configured with a device or devices including a tablet, a digitizer, and so on, which enable touch input actions. The display device 36 displays various kinds of information such as data, mathematical expressions, and calculation instructions. The display device 36 may be configured with a display device or devices including a liquid crystal display (LCD), an organic electroluminescence (EL) monitor, and so on. This embodiment will assume that the input device 34 is placed on the display device 36 so as to function as a touch panel serving as both an input unit and a display unit.

The communication device 37 communicates with the server 1 via the network 2 to send and receive various datasets. The communication device 37 may be configured with various devices complying with a communication mode or modes enabling the connection to the network 2, including, for example, a wireless LAN, Wi-Fi (registered trademark), and so on.

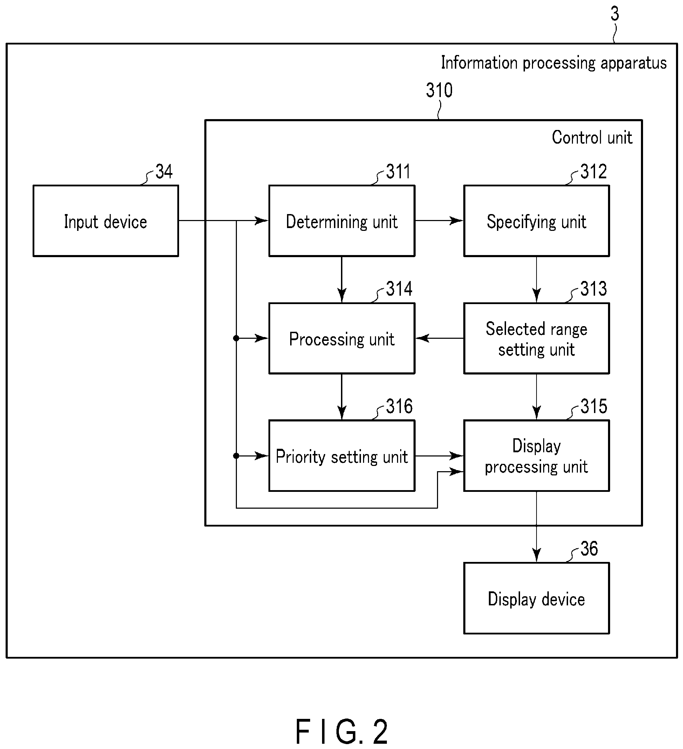

The above described processor 31 executing the program or programs stored in the storage device 33 realizes a control unit 310 having information processing blocks as shown in FIG. 2. The information processing apparatus 3 thus works as a mathematical expression editing apparatus which is capable of determining a range of selection for a mathematical expression displayed on the display screen in accordance with a character tapped by the user and the type of the tapping, and carrying out various kinds of processing on the selected range.

As the information processing blocks, the control unit 310 includes a determining unit 311, a specifying unit 312, a selected range setting unit 313, a processing unit 314, a display processing unit 315, and a priority setting unit 316. The determining unit 311 determines the type of a character that has been selected from characters displayed on the screen of the display device 36 by the user via the input device 34, or the type of the selecting action. The specifying unit 312 specifies, among the characters included in a mathematical expression and based on the type of the character determined by the determining unit 311, a relevant character which is a character related to the character selected by the user. Also, the specifying unit 312 specifies a selection target character among the characters included in the mathematical expression, in accordance with the type of the selecting action determined by the determining unit 311.

The selected range setting unit 313 sets, as a selected range, the character selected by the user and the relevant character specified by the specifying unit 312, or the character specified by the specifying unit 312. The processing unit 314 performs various kinds of processing on the selected range set by the selected range setting unit 313 in accordance with an instruction input by the user via the input device 34. The processing performed by the processing unit 314 includes processing for copying the selected range set by the selected range setting unit 313 (character string selection) and pasting it onto a position according to the instruction input from the input device 34 (character string reproduction). The display processing unit 315 performs processing for switching display contents displayed on the display device 36 in accordance with the instruction input from the input device 34, the selected range set by the selected range setting unit 313, and various kinds of processing performed by the processing unit 314. The display processing unit 315, in response to the processing unit 314 pasting a mathematical expression, displays a cursor (a character inputting position indication) at a position suitable for the subsequent editing of the mathematical expression. The priority setting unit 316 designates a priority position which is used in setting a cursor (a character inputting position indication) after the pasting of the selected range. Setting of priority positions may be incorporated in the priority setting unit 316 beforehand as an initial setting, or the priority positions may be adjustable according to, for example, the user handling the input device 34.

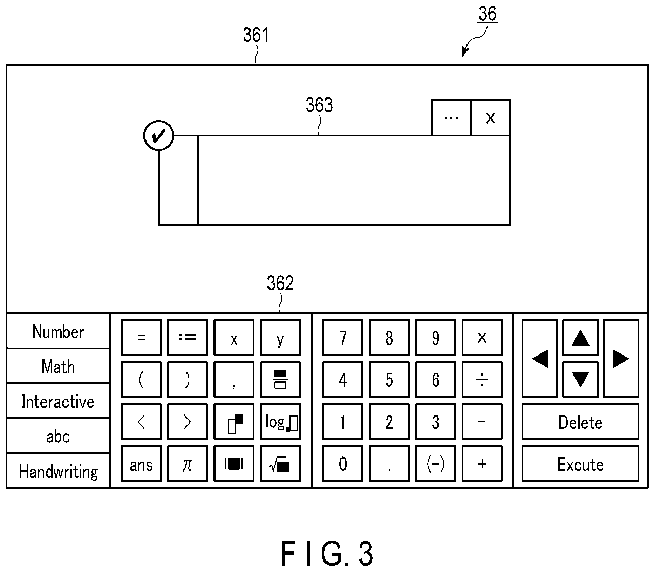

The information processing apparatus 3 displays an input screen for inputting a mathematical expression on the screen of the display device 36 in response to an instruction from the user via the input device 34. Display of the input screen for inputting a mathematical expression may be realized by, for example, a web browser running on the screen of the display device 36. One example of the input screen for inputting a mathematical expression is shown in FIG. 3.

The input screen for inputting a mathematical expression includes a data displaying part 361, a data inputting part 362, and a mathematical expression inputting part 363. The data displaying part 361 is a display portion for displaying various datasets. In one example, the data displaying part 361 displays a result of calculation performed by the server 1 based on an instruction for calculation received from the information processing apparatus 3.

The data inputting part 362 is an input portion which enables input of various mathematical expressions and calculation instructions including numerals, operators, arrow keys, etc. The mathematical expression inputting part 363 is an input portion which enables input of mathematical expressions. Not only one mathematical expression inputting part 363, but also multiple mathematical expression inputting parts 363 may be displayed at the same time.

The user is allowed to make setting, changes, addition, and so on to the values of parameters included in the mathematical expression input into the mathematical expression inputting part 363. The user is also allowed to select a part or all of the mathematical expression input into the mathematical expression inputting part 363 as desired and copy the same to another mathematical expression inputting part 363. Here, upon the user performing a selecting action on the screen of the display device 36 by tapping a character included in the mathematical expression input into the mathematical expression inputting part 363, the type of the tapped character is determined by the determining unit 311 shown in FIG. 2. Then, the specifying unit 312 shown in FIG. 2 specifies a relevant character related to the tapped character based on the determined type of the tapped character.

The selected range setting unit 313 shown in FIG. 2 selects a suitable range in the mathematical expression based on the tapped character and the relevant character. The display processing unit 315 shown in FIG. 2 causes the screen of the display device 36 to display the range that has been selected (hereinafter called a "selected range"). In the description below, a tap, if it is not specified as a double tap, is a single tap.

Next, actions performed by the information processing apparatus 3 according to the embodiment, namely, a mathematical expression editing apparatus, will be described.

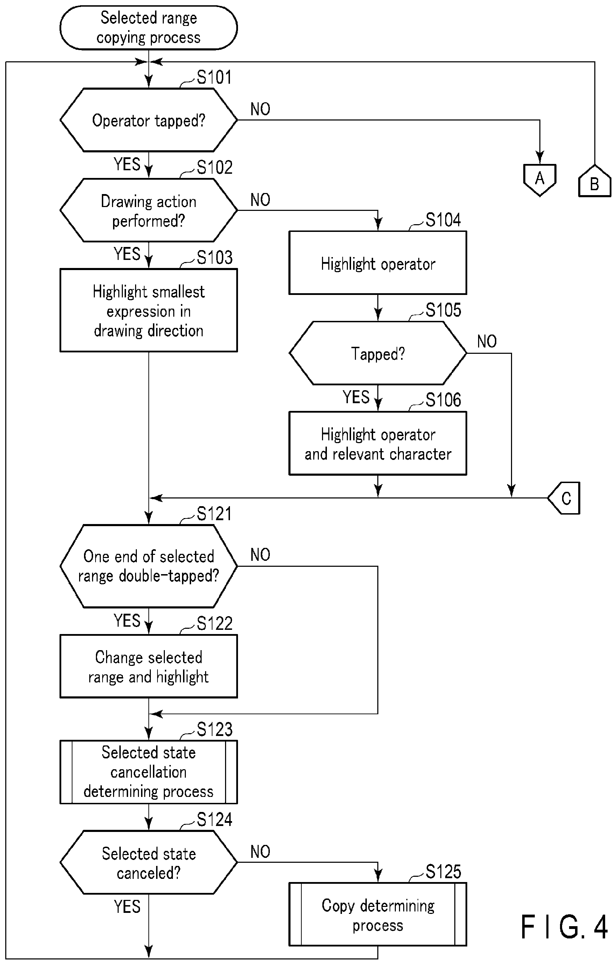

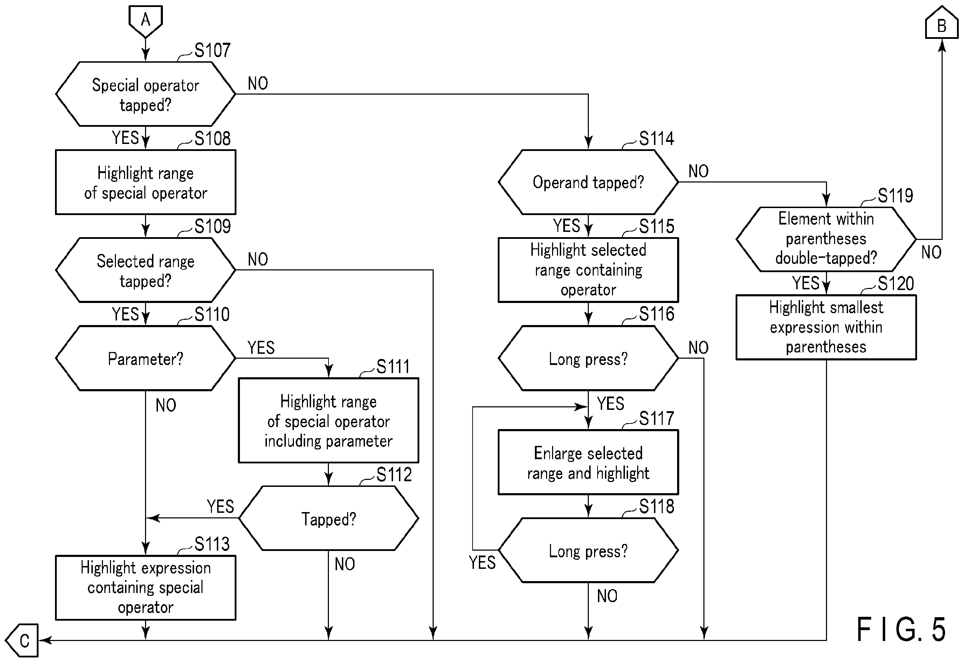

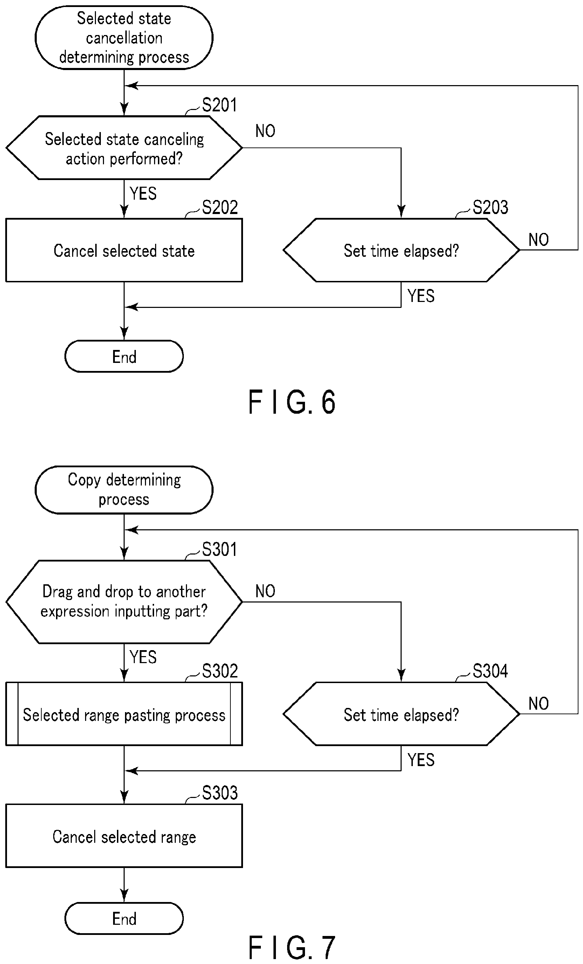

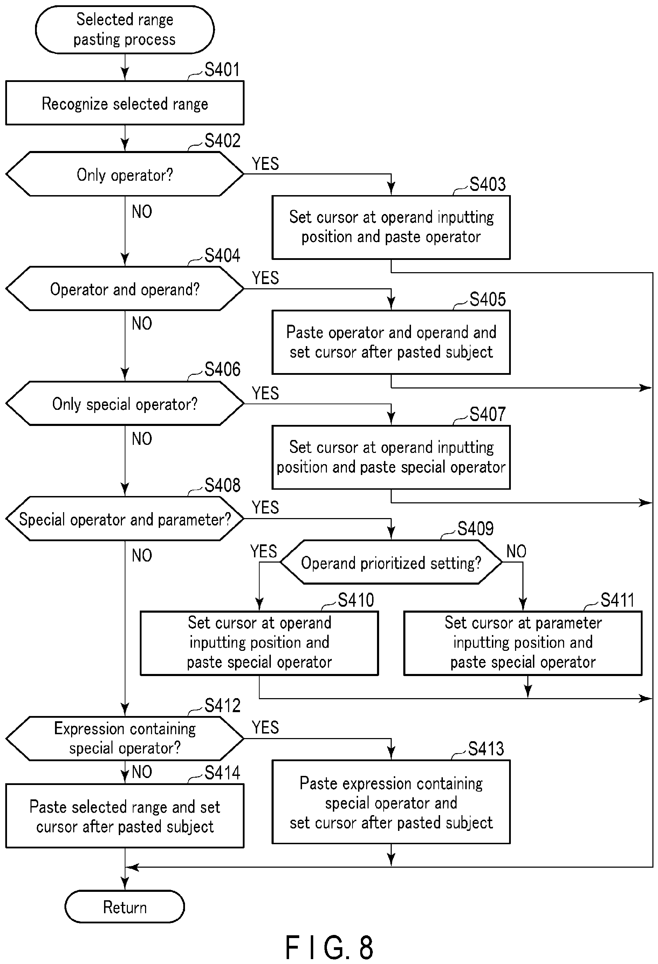

FIGS. 4 and 5 are flowcharts showing a copying process for a selected range in the mathematical expression editing method according to the embodiment. FIG. 6 is a flowchart showing a selected state cancellation determining process within the copying process according to the embodiment. FIG. 7 is a flowchart showing a copy determining process within the copying process according to the embodiment. FIG. 8 is a flowchart showing a selected range pasting process within the copy determining process according to the embodiment.

As the copying process for a selected range, a description will be given of the processing in which a range is copied upon the user selecting the range by conducting a predetermined selecting method for a mathematical expression input into the mathematical expression inputting part 363 shown in FIG. 3 and the range is pasted onto another mathematical expression inputting part 363.

The copying process for a selected range is stored in the form of a selected range copy processing program in the storage device 33 of the information processing apparatus 3 shown in FIG. 1. The information processing apparatus 3 executes the selected range copy processing program upon causing the input screen for inputting a mathematical expression shown in FIG. 3 to display the mathematical expression inputting part 363. More concretely, the processor 31 of the information processing apparatus 3 shown in FIG. 1 reads the selected range copy processing program from the storage device 33 and loads the program in the memory 32 so as to execute the program.

First, in response to the user tapping a mathematical expression on the screen of the display device 36, which has been input into the mathematical expression inputting part 363 shown in FIG. 3, the determining unit 311 of the control unit 310 determines whether or not an operator included in the mathematical expression has been tapped by the user (step S101). If an operator has been tapped by the user (step S101; YES), the determining unit 311 of the control unit 310 determines whether or not a drawing action has been subsequently performed (step S102).

If a drawing action has not been performed (step S102; NO), the specifying unit 312 specifies the tapped operator. The selected range setting unit 313 selects the tapped operator as a selected range. The display processing unit 315 highlights the selected range on the screen of the display device 36 (step S104).

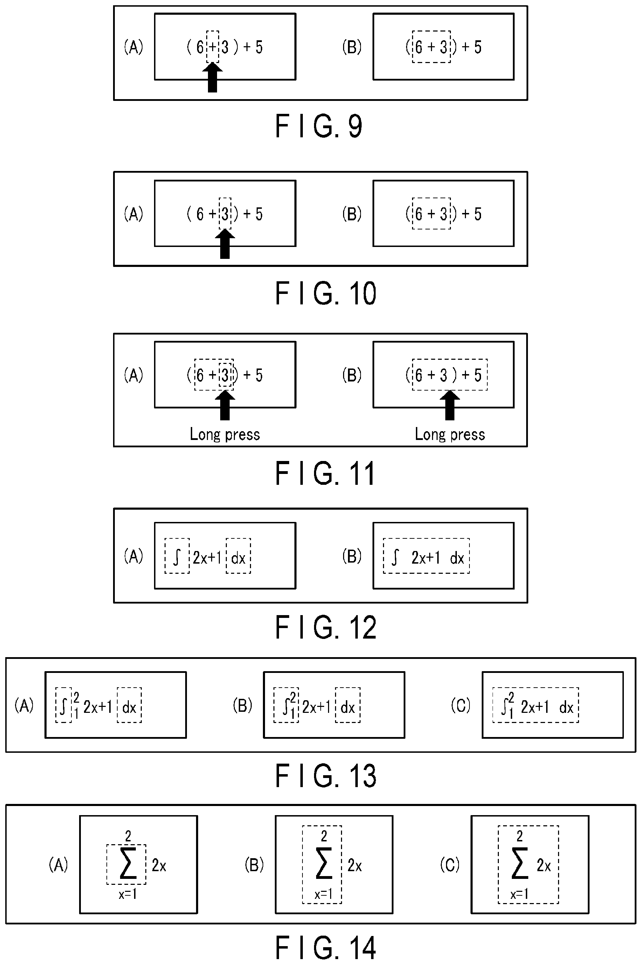

For example, supposing that the user has tapped, on the screen of the display device 36 and using the input device 34, an operator included in a mathematical expression shown in FIG. 9(A) which was input into the mathematical expression inputting part 363, the tapped operator is accordingly selected by the selected range setting unit 313. Here, a tap position will be indicated by an arrow for the following description. Also, it will be assumed that a range surrounded by a dotted line is a range tapped by the user. The selected range, i.e., a range selected by the selected range setting unit 313, may be displayed in such a manner that the color of the selected character and the color of the background of the selected character are reversely displayed, but for the sake of convenience, it will be assumed here that the selected range is surrounded by a two-dot chain line.

Here, if the determining unit 311 determines that an operator "+" has been tapped as shown in FIG. 9(A), the operator "+" is displayed in a highlighted form. Upon elapse of a set time, the operator "+" is set as a selected range.

If, before elapse of the set time, the user further taps the mathematical expression shown in FIG. 9(A) on the screen of the display device 36 using the input device 34 (step S105; YES), the specifying unit 312 accordingly specifies "6" and "3", which are operands of the preselected operator "+", as relevant characters. The selected range setting unit 313 selects the smallest mathematical expression that contains the selected operator and the relevant characters, namely, "6+3", as a selected range. The selected range is displayed in a highlighted form on the screen of the display device 36 by the display processing unit 315, as shown in FIG. 9(B) (step S106).

That is, for a mathematical expression containing an operator, tapping of the operator for the first time puts a range designation on only the operator, and subsequently tapping the mathematical expression for the second time creates a range designation for a range that also covers the operand of the first tapped operator. The determining unit 311 will then perform the process shown in step S121.

Next, a description will be given of a case where an operand in a mathematical expression input into the mathematical expression inputting part 363 is tapped.

Here, the determining unit 311 of the control unit 310 determines that the operand included in the mathematical expression input into the mathematical expression inputting part 363 shown in FIG. 3 has been tapped (step S114; YES).

In this case, the specifying unit 312 specifies, as a relevant character, the operator that is intended for the tapped operand. The selected range setting unit 313 selects, as a selected range, the smallest mathematical expression that contains the tapped operand and the relevant character specified by the specifying unit 312. The display processing unit 315 highlights the selected range on the screen of the display device 36 (step S115).

For example, supposing that the user has tapped, on the screen of the display device 36 and using the input device 34, an operand "3" included in a mathematical expression shown in FIG. 10(A) which was input into the mathematical expression inputting part 363, the tapped operand "3" and an operator "+" intended for this operand "3" are specified as characters relevant to each other, and the minimum mathematical expression "6+3" containing the relevant character "+" is accordingly selected by the selected range setting unit 313. In this case, the mathematical expression "6+3" is displayed in a highlighted form as shown in FIG. 10(B).

Subsequently, the determining unit 311 determines whether or not the operand included in the selected range is under a long-pressing action by the user on the screen of the display device 36 (step S116). If the operand is under a long-pressing action (step S116; YES), the selected range setting unit 313 gradually enlarges the selected range. The display processing unit 315 highlights the gradually enlarged selected range on the screen of the display device 36 (step S117). If the operand is not under a long-pressing action (step S116; NO), the selected range is not enlarged. The determining unit 311 will then perform the process shown in step S121 in FIG. 4.

For example, if a long-pressing action is performed on the currently selected "6+3" as shown in FIG. 11(A), the selected range is enlarged to cover a mathematical expression containing an operator "+" intended for "6+3" and also an operand "5" other than the "6+3" for which this operator is intended, namely, a mathematical expression "(6+3)+5". Accordingly, the selected "(6+3)+5" is displayed in a highlighted form as shown in FIG. 11(B).

Subsequently, the determining unit 311 determines whether or not the operand included in the selected range is under a further long-pressing action by the user on the screen of the display device 36 (step S118). If the operand is under a further long-pressing action (step S118; YES), the selected range is gradually enlarged in a similar manner. The display processing unit 315 highlights the gradually enlarged selected range on the screen of the display device 36 (step S117). If the operand is not under a further long-pressing action (step S118; NO), the selected range is not enlarged. The determining unit 311 will then perform the process shown in step S121 in FIG. 4.

If, in step S114, the operand has not been tapped (step S114; NO), the determining unit 311 determines whether or not one or both of an operator and an operand within parentheses contained in the mathematical expression have been subjected to a double tapping action by the user on the screen of the display device 36 (step S119). If one or both of an operator and an operand within parentheses contained in the mathematical expression have been subjected to a double tapping action (step S119; YES), the specifying unit 312 specifies the smallest mathematical expression within the parentheses that contains the double-tapped operator or the double-tapped operand, or both.

The selected range setting unit 313 selects the smallest mathematical expression specified by the specifying unit 312 as a selected range. The display processing unit 315 highlights the selected range on the screen of the display device 36 (step S120). The determining unit 311 will then perform the process shown in step S121 in FIG. 4. If one or both of an operator and an operand within parentheses contained in the mathematical expression have not been subjected to a double tapping action (step S119; NO), the processing unit 314 of the control unit 310 returns to step S101 shown in FIG. 4.

If, after tapping of the operator (step S101; YES), a drawing action has been performed (step S102; YES), the specifying unit 312 of the control unit 310 specifies the smallest mathematical expression that contains an operator and an operand located in the direction of the drawing action, or the smallest mathematical expression that is contained in parentheses located in the direction of the drawing action. The selected range setting unit 313 of the control unit 310 selects the smallest mathematical expression specified by the specifying unit 312, as a selected range.

For example, in an instance where an operator is tapped and then a drawing action is performed on the mathematical expression, a range that covers the tapped operator and an operand of the operator is selected. In an instance where a drawing action is performed after an operand is tapped, a range that covers the tapped operand, an operator overlapping the drawing action, and an operand of this operator is selected.

Next, a description will be given of a case where a special operator in a mathematical expression input into the mathematical expression inputting part 363 is tapped.

Here, the determining unit 311 of the control unit 310 determines that the special operator included in the mathematical expression input into the mathematical expression inputting part 363 shown in FIG. 3 has been tapped (step S107; YES).

If the special operator has been tapped by the user on the screen of the input device 34 (step S107; YES), the specifying unit 312 specifies the tapped special operator. The selected range setting unit 313 then selects the tapped special operator as a selected range. The display processing unit 315 highlights the selected range on the screen of the display device 36 (step S108).

Subsequently, the determining unit 311 determines whether or not the selected range in step S108, before elapse of a set time, has been further tapped by the user on the screen of the display device 36 (step S109).

If the selected range has been tapped (step S109; YES), the specifying unit 312 determines whether or not the special operator selected as the selected range is accompanied by a parameter, and if a parameter accompanies it, specifies the range of the special operator and the parameter (step S110; YES). The selected range setting unit 313 selects the tapped special operator and the parameter as a selected range. The display processing unit 315 highlights the selected range on the screen of the display device 36 (step S111).

If the special operator is not accompanied by a parameter (step S110; NO), the selected range setting unit 313 selects a mathematical expression that contains the tapped special operator and an operand of the special operator as a selected range. The display processing unit 315 highlights the selected range (the special operator and the operand) on the screen of the display device 36 (step S113).

In the instance where the special operator and the parameter are selected as a selected range, the determining unit 311 subsequently determines whether or not the selected range, before elapse of a set time, has been further tapped by the user on the screen of the display device 36 (step S112).

If the selected range has been tapped (step S112; YES), the specifying unit 312 specifies the range of a mathematical expression that covers the special operator and the parameter selected as the selected range and further covers an operand of the special operator (step S110; YES). The selected range setting unit 313 selects the tapped special operator, the parameter, and the operand as the selected range. The display processing unit 315 highlights the selected range (the special operator, the parameter, and the operand) on the screen of the display device 36 (step S113).

For example, supposing that the user has tapped, on the screen of the display device 36 and using the input device 34, a special operator "*∫*" (or "dx") included in a mathematical expression shown in FIG. 12(A) which was input into the mathematical expression inputting part 363, the tapped special operator "f" and its associated "dx" are accordingly selected by the selected range setting unit 313.

If, before elapse of a set time, the user further taps the mathematical expression shown in FIG. 12(A) on the screen of the display device 36 using the input device 34, an operand "2x+1" of the already selected special operators "*∫*" and "dx" is accordingly selected as relevant characters, since the special operator "f" is not accompanied by a parameter. The range covering the special operators "f" and "dx" and the operand "2x+1" is then displayed in a highlighted form on the screen of the display device 36, as shown in FIG. 12(B).

That is, for a mathematical expression containing a special operator not accompanied by a parameter, tapping of the special operator for the first time puts a range designation on only the special operator, and subsequently tapping the mathematical expression for the second time creates a range designation for a range that also covers the operand of the first tapped special operator.

Next, a description will be given of a case where a special operator is accompanied by a parameter.

For example, supposing that the user has tapped, on the screen of the display device 36 and using the input device 34, a special operator "f" (or "dx") accompanied by parameters and included in a mathematical expression shown in FIG. 13(A) which was input into the mathematical expression inputting part 363, the tapped special operator "f" and its associated "dx" are accordingly selected by the selected range setting unit 313.

If, before elapse of a set time, the user again taps the mathematical expression shown in FIG. 13(A) on the screen of the display device 36 using the input device 34, the already selected special operators "*∫*" and "dx" and a range of the parameters accompanying the special operator "f" are accordingly further specified as characters relevant to each other. Then, the range covering the special operators "*∫*" and "dx" and the parameters is displayed in a highlighted form on the screen of the display device 36, as shown in FIG. 13(B).

If, before elapse of a set time, the user further taps the mathematical expression shown in FIG. 13(A) on the screen of the display device 36 using the input device 34, the already selected special operators "*∫*" and "dx", the parameters accompanying the special operator "f", and further an operand "2x+1" of the special operators "f" and "dx" are accordingly specified as characters relevant to each other. Then, the range covering the special operators "f" and "dx", the parameters, and the operand "2x+1" is displayed in a highlighted form on the screen of the display device 36, as shown in FIG. 13(C).

That is, for a mathematical expression containing a special operator accompanied by a parameter, tapping of the special operator for the first time puts a range designation on only the special operator, subsequently tapping the mathematical expression for the second time creates a range designation for a range that covers the special operator and the parameter, and further subsequently tapping the mathematical expression for the third time creates a range designation for a range that also covers the operand of the first tapped special operator.

FIG. 14 shows an example where a mathematical expression containing a special operator "Σ" differing from the special operator "*∫*" and accompanied by other types of parameters has been input into the mathematical expression inputting part 363.

In this case, in response to the special operator "Σ" being tapped, a range designation is put on the range of the special operator "Σ", and the special operator "Σ" is displayed in a highlighted form as shown in FIG. 14(A). If the mathematical expression is further tapped, a range designation is put on the range that covers the parameters of the special operator "Σ", and this range covering the special operator "Σ" and the parameters is displayed in a highlighted form as shown in FIG. 14(B). If the mathematical expression is further tapped once more, a range designation is put on the range that covers an operand "2x" of the special operator "Σ", and this range covering the special operator "Σ", the parameters, and the operand "2x" is displayed in a highlighted form as shown in FIG. 14(C).

The above description has assumed instances where a special operator is tapped first for a mathematical expression containing the special operator. Note that, if an operator or an operand in a mathematical expression containing a special operator is tapped first (steps S101 and S114; YES), the range covering the operator or the operand is given a range designation first.

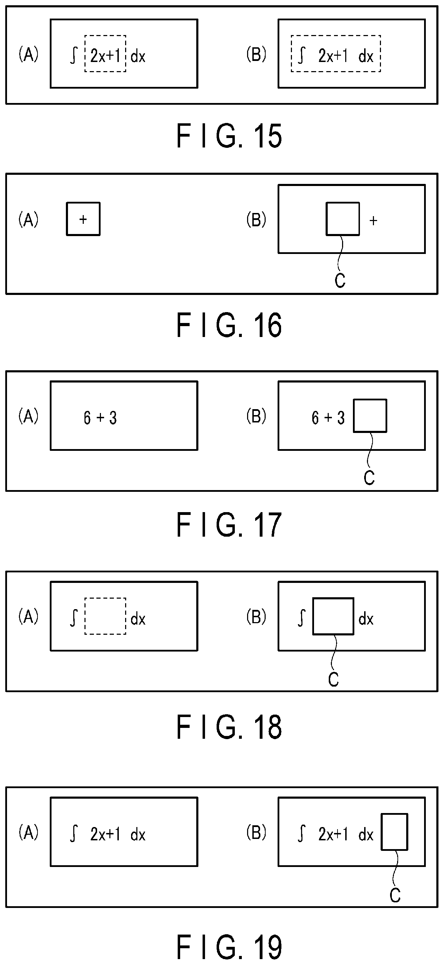

For example, supposing that a mathematical expression containing a special operator "*∫*" as shown in FIG. 15(A) has been subjected to tapping of any character in "2x+1" and then to a consecutive tapping action (steps S105 and S106) or a drawing action (steps S102 and S103), or a long-pressing action (steps S116 to S118), the range enlargement is first conducted on the range designation for "2x+1" and a range designation is further put on the range that covers the special operators "f" and "dx" as shown in FIG. 15(B).

The description has used the examples in which special operators are "f" and "Σ", but no limitation is intended by this. Selected ranges may be set in the same manner as described above for other existing special operators such as "log", "lim", "sin", and "ln".

Now, in the state where the selected range is displayed in a highlighted form, the determining unit 311 determines in step S121 in FIG. 4 whether or not one end of the selected range, showing the selected state, has been subjected to a double tapping action. If one end of the selected range showing the selected state has been subjected to a double tapping action (step S121; YES), the specifying unit 312 specifies an operand or the smallest mathematical expression containing both an operand and an operator at the opposite end to the double-tapped end, or an operand immediately outside a parenthesis at the opposite end, or the smallest mathematical expression enclosed in the parenthesis. The selected range setting unit 313 adopts the operand, the smallest mathematical expression, or the like, specified by the specifying unit 312, as a selected range.

The display processing unit 315 replaces the original selected range with the selected range adopted by the selected range setting unit 313 and highlights the new selected range on the screen of the display device 36 (step S122). If one end of the selected range showing the selected state has not been subjected to a double tapping action (step S121; NO), no change is made to the selected range.

Subsequently, the processing unit 314 of the control unit 310 performs a selected state cancellation determining process (step S123). The selected state cancellation determining process will be described with reference to the flowchart shown in FIG. 6. The processing unit 314 determines whether or not the user has performed an action to cancel the selected state (step S201). This selected state canceling action is an action for canceling the selected state represented by the selected range. For example, such an action may be a tapping action of tapping a portion on the screen of the display device 36 that differs from the selected range set by the selected range setting unit 313, an action of pressing down the "Delete" key included in the data inputting part 362 illustrated in FIG. 3, and the like. If the selected state canceling action has been performed (step S201; YES), the processing unit 314 cancels the selected state represented by the selected range (step S202).

In the absence of a selected state canceling action (step S201; NO), the processing unit 314 determines whether or not a preset time has elapsed since the start of the selected state cancellation determining process (step S203). If the preset time has elapsed (step S203; YES), the processing unit 314 ends the selected state cancellation determining process and returns to the flowchart shown in FIG. 4 for the copying process for the selected range. If the preset time has not elapsed yet (step S203; NO), the processing unit 314 returns to step S201 and repeats steps S201 to S203.

The processing unit 314 of the control unit 310 determines whether or not the selected state has been canceled in the selected state cancellation determining process in step S123 (step S124). If the selected state has been canceled (step S124; YES), the processing unit 314 returns to step S101 and repeats the processing from step S101 to step S125.

If the selected state has not been canceled (step S124; NO), the processing unit 314 of the control unit 310 executes a copy determining process (step S125). The copy determining process will be described with reference to the flowchart shown in FIG. 7. The processing unit 314 determines whether or not the selected range adopted by the selected range setting unit 313 has been subjected to a drag and drop action to another mathematical expression inputting part 363 on the screen of the display device 36 (step S301).

If the selected range has been dragged and dropped to another mathematical expression inputting part 363 (step S301; YES), the processing unit 314 performs a selected range pasting process in which the selected range is pasted onto this another mathematical expression inputting part 363 (which will be described later) (step S302). Subsequently, the processing unit 314 cancels the selected range (step S303). The processing unit 314 ends the copy determining process and returns to the flowcharts shown in FIGS. 4 and 5 for the copying process for the selected range. The processing unit 314 returns to step S101 and repeats the processing from step S101 to step S125.

In the absence of a drag and drop action for the selected range to another mathematical expression inputting part 363 (step S301; NO), the processing unit 314 determines whether or not a preset time has elapsed since the start of the copy determining process (step S304). If the preset time has elapsed (step S304; YES), the processing unit 314 cancels the selected range (step S303). The processing unit 314 then ends the copy determining process and returns to the flowcharts shown in FIGS. 4 and 5 for the copying process for a selected range. The processing unit 314 returns to step S101 and repeats the processing from step S101 to step S125. If the preset time has not elapsed (step S304; NO), the processing unit 314 returns to step S301 and repeats the processing from step S301 to step S305.

As described above, the information processing apparatus 3 according to the embodiment can determine the type of a character tapped by the user on the screen of the display device 36 among multiple characters contained in a mathematical expression displayed on the screen, specify, based on the determined type of the character, a relevant character related to the tapped character among the multiple characters, and set the character subjected to the selecting action and the relevant character as a selected range for the selected character among the multiple characters. Accordingly, the user is enabled to select an appropriate range of characters in mathematical expressions in a simplified manner.

Next, the selected range pasting process will be described with reference to the flowchart shown in FIG. 8.

The processing unit 314 recognizes each character included in the selected range set as a copying subject (step S401) and determines, based on the character or characters in the selected range, the position of a cursor for indicating a character inputting position after the pasting of the character or characters included in the selected range (steps S402 to S413). If a mathematical expression in the selected range contains an operator or a special operator, the processing unit 314 specifies the operator or the special operator and determines the cursor position based on the operator or the special operator.

First, if the selected range contains only a character which is an operator (step S402; YES), the processing unit 314 determines the cursor position to be an inputting position for an operand that corresponds to the operator. The display processing unit 315 sets the cursor position at the inputting position for the operand and pastes the character (the operator) contained in the selected range (step S403).

For example, supposing that the selected range contains only a character which is an operator "+" as shown in FIG. 16(A), the cursor position is set at the position immediately before the operator "+" as shown in FIG. 16(B) and the operator "+" contained in the selected range is pasted.

As such, the cursor C is already displayed at the inputting position for the operand of the pasted operator "+" upon pasting of the operator "+", and therefore, input of an operand character is readily enabled without requiring an action of changing the position of the cursor C.

Next, if characters in the selected range are an operator and an operand (step S404; YES), the processing unit 314 determines the cursor position to be immediately after the operator and the operand constituting the selected range. The display processing unit 315 sets the cursor position at the inputting position immediately after the operator and the operand and pastes the characters (the operator and the operand) contained in the selected range (step S405).

For example, supposing that characters in the selected range are a character string "6+3" containing an operator and operands as shown in FIG. 17(A), the cursor position is set at the position immediately after the character string "6+3" as shown in FIG. 17(B) and the character string "6+3" in the selected range is pasted.

As such, the cursor C is already displayed at the inputting position immediately after the pasted character string "6+3" upon pasting of the character string "6+3", and therefore, an action of changing the position of the cursor C is not required for inputting a character string after the character string "6+3" and input of an operand character is readily enabled.

Next, if the selected range contains only a character which is a special operator (step S406; YES), the processing unit 314 determines the cursor position to be an inputting position for an operand that corresponds to the special operator. The display processing unit 315 sets the cursor position at the inputting position for the operand and pastes the character (the special operator) contained in the selected range (step S407).

For example, supposing that characters in the selected range are only special operators "f" and "dx" as shown in FIG. 18(A), the cursor position is set at the inputting position for an operand of the special operator "f", that is, between "f" and "dx" here as shown in FIG. 16(B), and the special operators "f" and "dx" in the selected range are pasted.

As such, the cursor C is already displayed at the inputting position for the operand of the pasted special operators "f" and "dx" upon pasting of the special operators "f" and "dx", and therefore, input of an operand character is readily enabled without requiring an action of changing the position of the cursor C.

Note that, while the example shown in FIG. 18, which is related to special operators "f" and "dx", sets the cursor position between "f" and "dx", inputting positions for operands vary depending on other special operators, and accordingly, the cursor position is set at the inputting position for an operand corresponding to each special operator.

Next, if characters in the selected range are a mathematical expression containing a special operator and an operand (step S412; YES), the processing unit 314 determines the cursor position to be immediately after the mathematical expression. The display processing unit 315 sets the cursor position at the inputting position immediately after the mathematical expression and pastes the characters (the mathematical expression containing the special operator and the operand) contained in the selected range (step S413).

For example, supposing that characters in the selected range are a mathematical expression containing special operators "f" and "dx" and an operand "2x+1" as shown in FIG. 19(A), the cursor position is set at the position immediately after the mathematical expression as shown in FIG. 19(B) and the mathematical expression in the selected range is pasted.

As such, the cursor C is already displayed at the inputting position immediately after the pasted mathematical expression containing the special operators and the operand upon pasting of the mathematical expression, and therefore, an action of changing the position of the cursor C is not required for inputting a mathematical expression after the pasted mathematical expression and input of an operand character is readily enabled. In such instances where a range designation is created to cover not only special operators "*∫*" and "dx" but also an operand "2x+1", the operand "2x+1" is often used as it is after the pasting. Accordingly, in the event where a range designation is put on a mathematical expression, the cursor C is set at the inputting position immediately after the pasted mathematical expression, so that editing actions can be simplified.

Note that, if characters in the selected range are a mathematical expression containing an operator and an operand (step S412; NO), the processing unit 314 determines the cursor position to be immediately after the mathematical expression in the same manner as in the above described case of putting a range designation on a mathematical expression containing a special operator. The display processing unit 315 sets the cursor position at the inputting position immediately after the mathematical expression and pastes the characters (the mathematical expression containing the operator and the operand) contained in the selected range (step S414).

Next, if characters in the selected range contain a special operator and a parameter (step S408; YES), the processing unit 314 determines the cursor position corresponding to the special operator in accordance with priority position setting in the priority setting unit 316.

For example, for coping with the cases where the selected range contains a special operator and a parameter, the cursor position after pasting can be set to either the position for an operand of the special operator or the position for the parameter. It will be assumed that priority has been set for the position for an operand, as a default setting in the priority setting unit 316 (step S409; YES).

In this case, the processing unit 314 determines the cursor position to be the position for an operand of the special operator. The display processing unit 315 sets the cursor position at the inputting position for the operand and pastes the characters (the special operator) contained in the selected range (step S410).

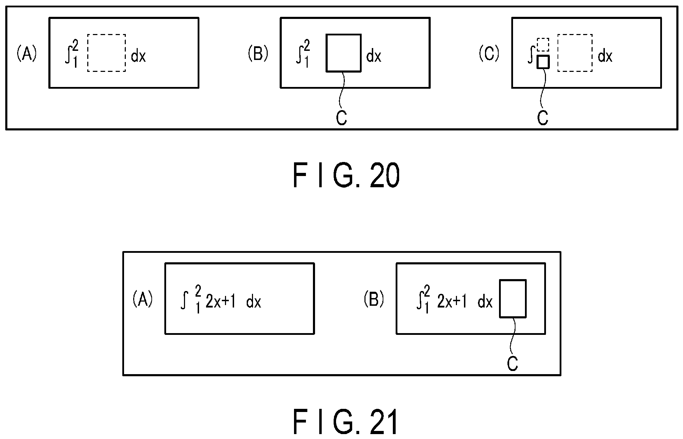

For example, supposing that the selected range is constituted by special operators "*∫*" and "dx" and parameters "1" and "2" accompanying the special operator "f" as shown in FIG. 20(A), the cursor position is set at the inputting position for an operand of the special operator "f", that is, between "f" and "dx" here as shown in FIG. 16(B), and the special operators "f" and "dx" and the parameters "1" and "2" accompanying the special operator "*∫*" in the selected range are pasted.

On the other hand, if priority has been set for the position for the parameter in the priority setting unit 316 (step S409; NO), the processing unit 314 determines the cursor position to be the position for the parameter of the special operator. The display processing unit 315 sets the cursor position at the inputting position for the parameter of the special operator and pastes the characters (the special operator) contained in the selected range (step S411).

In this case, the cursor position is set at the position for the parameter of the special operator "f", that is, the position for "1" (or "2") in the selected range as shown in FIG. 20(C), and the special operators "f" and "dx" in the selected range are pasted.

Note that, while FIG. 20(C) shows the case where the parameters "1" and "2" accompanying the special operator "f" are not displayed, pasting (displaying) may be performed together with the parameters "1" and "2", and the cursor C may be set at the position of "1".

As described above, the position of the cursor C after pasting of a special operator and a parameter accompanying the special operator can be determined according to the priority setting. Thus, the position of the cursor C after pasting can be set through the priority setting with the priority setting unit 316 in advance, so as to allow the user to enjoy easy editing.

Note that, if characters in the selected range are a mathematical expression containing a special operator, a parameter, and an operand (step S412; YES), the processing unit 314 determines the cursor position to be immediately after the mathematical expression in the same manner as in the above described case of putting a range designation on a mathematical expression containing a special operator. The display processing unit 315 sets the cursor position at the inputting position immediately after the mathematical expression and pastes the characters (the mathematical expression containing the operator and the operand) contained in the selected range (step S413).

For example, supposing that characters in the selected range are special operators "*∫*" and "dx", parameters "1" and "2" accompanying the special operator "f", and an operand "2x+1" as shown in FIG. 21(A), the cursor position is set at the position immediately after the mathematical formula as shown in FIG. 21(B), and the special operators "f" and "dx", the parameters "1" and "2" accompanying the special operator "f", and the operand "2x+1" in the selected range are pasted.

As described above, the information processing apparatus 3 according to the embodiment can set a selected range in a mathematical expression displayed on the screen of the display device 36 and, in conjunction with the pasting of the selected range, display a cursor (a character inputting position indication) at a position suitable for the subsequent editing of the mathematical expression in accordance with the pasted character string (an operator, a special operator, a parameter accompanying the special operator, etc.). Therefore, actions for post-pasting editing can be simplified.

Note that, while it has been assumed that the processes shown in each of the flowcharts are performed by the information processing apparatus 3 (the control unit 310), the processes may also be performed by the server 1. In that case, the information processing apparatus 3 accepts inputs from the user and provides screen display through the display device 36, and then displays, with the web browser running on the screen of the display device 36, processing results according to the above described processes (the copying process for a selected range, the selected range pasting process, etc.) performed by the server 1.

The description of the foregoing embodiment has assumed a so-called copy action by which a selected character string is copied while leaving the original character string. However, needless to say, the embodiment is also applicable to a so-called cut action by which a selected character string is not left after the copying.

It has also been assumed for the foregoing embodiment that the input device 34 is placed on the display device 36 in the information processing apparatus 3 shown in FIG. 1, so as to function as a touch panel serving as both an input unit and a display unit. No limitations are intended by this, and the input device 34 may also be a mouse for enabling the user to make selecting actions performed in the foregoing embodiment. In that case, a tapping action on the touch panel corresponds to a clicking action with the mouse. A double tapping action on the touch panel corresponds to a double clicking action with the mouse.

Also, the description of the foregoing embodiment has assumed that a tapping action, a double tapping action, a long-pressing action, and a drawing action, each serving as a selecting action by the user, form individual processes. No limitations are intended by this, and a tapping action, a double tapping action, a long-pressing action, and a drawing action may be replaced with one another. For example, processes by a tapping action and a double tapping action are mutually replaceable, the processes by a double tapping action and a long-pressing action are mutually replaceable, and so on.

Also, it has been assumed for the foregoing embodiment that the server 1 performs data calculation based on data for calculation, a mathematical expression, and an instruction for calculation received from the information processing apparatus 3, and the information processing apparatus 3 is caused to display the calculation result. No limitations are intended by this, and the information processing apparatus 3 may also be adapted to, by itself, perform data calculation based on data for calculation, a mathematical expression, and an instruction for calculation, and to display the calculation result.

Also, it has been assumed for the foregoing embodiment that the color of a selected character and the color of the background of the selected character are reversely displayed (it has been assumed here that the selected range constituted by selected characters is surrounded by a two-dot chain line for the sake of convenience) and displayed on the screen of the display device 36. No limitations are intended by this, and a selected character may also be displayed in a different manner from unselected characters in color, font, character appearance including an italic form, a bold form, etc., and so on. The selected range constituted by selected characters is not required to be displayed in a highlighted form on the screen of the display device 36.

Methods described for the embodiment, that is, methods utilized in the processes, etc., shown in the flowcharts may be stored in a storage medium such as a memory card (a ROM card, a RAM card, etc.), a magnetic disk (a flexible disk, a hard disk, etc.), an optical disk (a CD-ROM, a DVD, etc.), or a semiconductor memory, and distributed as a computer-executable program. Then, a computer reads the program stored in the external storage medium and is controlled to behave according to the program, so that the computer can realize processes equivalent to the functions described for the embodiment.

The program data for realizing each method may also be transmitted on the network (the Internet) in the form of program codes. The program data may be loaded from a computer which is connected to this network so that functions equivalent to those described for the foregoing embodiment can be realized.

The present invention is not limited to the foregoing embodiment. For practical implementation, various modifications may be adopted without departing from its gist. Moreover, the foregoing embodiment involves various aspects or stages of inventions, and appropriate combinations of the features disclosed herein shall permit various inventions to be derived. For example, one or more of the features disclosed in the embodiments may be omitted or combined. Provided that such modifications can solve the intended problem and bring the intended effects as discussed above, the modifications should each be deemed an invention.

### INDUSTRIAL APPLICABILITY

The present invention relates to a mathematical expression editing method and has industrial applicability.

### REFERENCE SIGNS LIST

- 1: Server
- 2: Network
- 3: Information processing apparatus
- 31: Processor
- 3: Memory
- 33: Storage device
- 34: Input device
- 36: Display device
- 37: Communication device
- 38: Bus
- 10: System
- 310: Control unit
- 311: Determining unit
- 312: Specifying unit
- 313: Selected range setting unit
- 314: Processing unit
- 315: Display processing unit
- 316: Priority setting unit
- 361: Data displaying part
- 362: Data inputting part
- 363: Mathematical expression inputting part

## Claims

1. A mathematical expression editing method performed by a mathematical expression editing apparatus, **characterized by** comprising:
specifying a copying subject range from a predetermined mathematical expression based on a selecting action of a user;
determining, in response to an operator being specified from the copying subject range, an inputting position for a new character to be input into a mathematical expression which contains the copying subject range, based on the specified operator; and
setting the determined inputting position to be a display position of a cursor.

2. The mathematical expression editing method according to claim 1, **characterized in that**, if the specified operator is a special operator, a position for an operand of the special operator is determined as the inputting position for the new character.

3. The mathematical expression editing method according to claim 1, **characterized in that**, if the specified operator is a special operator and a mathematical expression is extracted after the special operator, a position after the special operator and the mathematical expression is determined as the inputting position for the new character.

4. The mathematical expression editing method according to claim 1, **characterized in that**, if the specified operator is a special operator and a parameter for use with the special operator is extracted, a position for the parameter is determined as the inputting position for the new character.

5. The mathematical expression editing method according to claim 1, **characterized in that**, if the specified operator is a special operator and each of a mathematical expression after the special operator and a parameter for use with the special operator is extracted, a position after the special operator and the mathematical expression or a position for the parameter is determined as the inputting position for the new character based on a preset priority.

6. The mathematical expression editing method according to claim 1, **characterized in that**, if the specified operator is a predetermined operator differing from a special operator, a position immediately before the operator is determined as the inputting position for the new character.

7. A mathematical expression editing apparatus comprising at least one control unit, **characterized in that** the control unit is configured to
specify a copying subject range from a predetermined mathematical expression based on a selecting action of a user,
determine, in response to an operator being specified from the copying subject range, an inputting position for a new character to be input into a mathematical expression which contains the copying subject range, based on the specified operator, and
set the determined inputting position to be a display position of a cursor.

8. A program for causing a computer of a mathematical expression editing apparatus to function as:
specifying means for specifying a copying subject range from a predetermined mathematical expression based on a selecting action of a user;
determining means for determining, in response to an operator being specified from the copying subject range, an inputting position for a new character to be input into a mathematical expression which contains the copying subject range, based on the operator specified by the specifying means; and
setting means for setting the inputting position determined by the determining means, to be a display position of a cursor.
